# EUROPÄISCHE PATENTSCHRIFT

(11) **EP 0 499 829 B1**
(45) Veröffentlichungstag und Bekanntmachung des Hinweises auf die Patenterteilung: **12.04.1995**
(21) Anmeldenummer: 92101167.2
(22) Anmeldetag: 24.01.1992
(51) Int. Cl.: B60S 1/38

(54) **Wischvorrichtung für Scheiben von Kraftfahrzeugen**
Wiping arrangement for automobile vehicle windows
Installation d'essuyage pour vitres des véhicules automobiles

(30) Priorität: 21.02.1991 DE 4105406
(43) Veröffentlichungstag der Anmeldung: 26.08.1992
(73) Patentinhaber: ROBERT BOSCH GMBH, 70442 Stuttgart (DE)
(72) Erfinder: Wollenschlaeger, Dieter, W-7582 Buehlertal (DE)

(56) Entgegenhaltungen:
- EP-A- 0 429 334
- FR-A- 1 296 311
- FR-A- 2 505 754
- FR-A- 2 550 744
- PATENT ABSTRACTS OF JAPAN vol. 12, no. 52 (M-668)(2899) 17. Februar 1988 & JP-A-62 199 558

## Beschreibung

### Stand der Technik

Die Erfindung geht aus von einer Wischvorrichtung nach der Gattung des Hauptanspruchs. Es ist schon eine Wischvorrichtung bekannt (DE-A-36 37 348), bei der das Wischblatt eine einzige Windabweisleiste hat, weiche zwar über einen relativ kurzen Abschnitt des überstrichenen Wischfeldes auf der Scheibe den Anpreßdruck des Wischblatts auf die Scheibe im gewünschten Maße beeinflussen kann. Durch die Scheibenkrümmung werden jedoch die für den Anpreßdruck maßgebenden Verhältnisse rasch geändert, so daß die beabsichtigte Wirkung der Windabweisleiste rasch nachläßt, ja sogar nachteilig sein kann.

### Vorteile der Erfindung

Die erfindungsgemäße Wischvorrichtung mit den kennzeichnenden Merkmalen des Hauptanspruchs hat demgegenüber den Vorteil, daß die anströmende Luft in einen zwischen den einander zugewandten Flächen der beiden Windabweisleisten gebildeten Kanal gedrückt wird, in dem sie so geführt wird, daß die erwünschte Wirkung über einen erheblich größeren Bereich des Wischfeldes erhalten bleibt.

Durch die in den Unteransprüchen aufgeführten Maßnahmen sind vorteilhafte Weiterbildungen und Verbesserungen der im Hauptanspruch angegebenen Wischvorrichtung möglich. Besonders vorteilhaft ist es, wenn die zweite Windabweisleiste über mehrere rippenartige Stützen mit der ersten Windabweisleiste und über diese mit dem Wischblatt verbunden ist, so daß eine zusätzliche Führung der Luftströmung quer zur Längserstreckung der beiden Windabeisleisten erreicht wird.

### Zeichnung

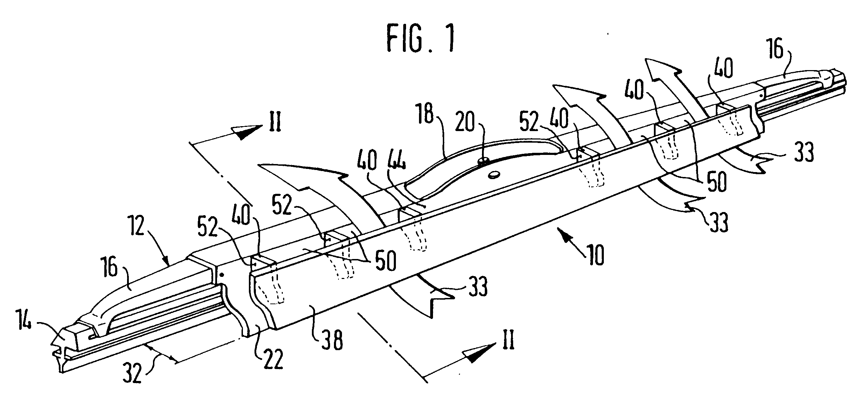

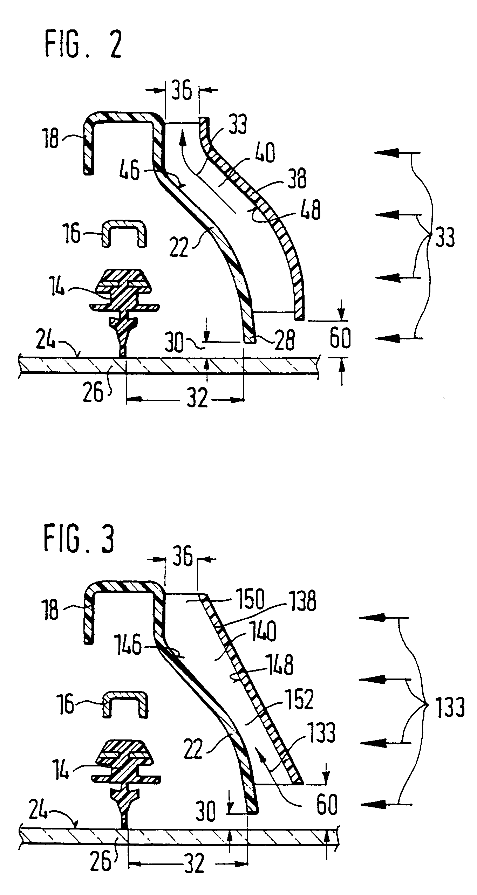

Ausführungsbeispiele der Erfindung sind in der Zeichnung dargestellt und in der nachfolgenden Beschreibung näher erläutert. Es zeigen Figur 1 eine perspektivische Ansicht eines erfindungsgemäß ausgebildeten Wischblatts einer Wischvorrichtung für Scheiben von Kraftfahrzeugen, Figur 2 einen Querschnitt durch das Wischblatt gemäß Figur 1, entlang der Linie II-II, in vergrößerter Darstellung, wobei von dem eigentlichen Wischblatt lediglich die Schnittflächen dargestellt sind und Figur 3 einen Schnitt gemäß Figur 2, durch ein anderes ausgebildetes Wischblatt.

### Beschreibung der Ausführungsbeispiele

Zu einer Wischvorrichtung für Scheiben von Kraftfahrzeugen, insbesondere der Windschutzscheiben von Kraftfahrzeugen, gehört ein Wischblatt 10 (Figur 1), das beim Ausführungsbeispiel ein mehrteiliges Traggestell 12 und eine an diesem gehaltene, gummielastische Wischleiste 14 aufweist. Die Wischleiste 14 ist von sogenannten Krallenbügeln 16 des Traggestells 12 gefaßt. Sowohl das Traggestell 12 als auch die Wischleiste 14 sind im wesentlichen langgestreckt ausgebildet. An einem die Krallenbügel 16 verbindenden Hauptbügel 18, der mit einer Anschlußvorrichtung 20 für einen nicht dargestellten Wischerarm ausgestattet ist, ist eine erste, innere Windabweisleiste 22 befestigt. Die Windabweisleiste 22 erstreckt sich von dem Hauptbügel 18 aus bis nahe zu der zu wischenden Oberfläche 24 einer Windschutzscheibe 26, welche von der Wischleiste 14 während des Betriebs der Wischvorrichtung überstrichen wird. Dabei wird das Wischblatt 10 quer zu seiner Längserstreckung über die Scheibe bewegt, wobei die Wischleiste 14 mit dem nötigen Anpreßdruck auf der Oberfläche 24 der Scheibe 26 aufliegt. Die Windabweisleiste 22 ist ebenfalls langgestreckt ausgebildet. Sie erstreckt sich in ihrer Breite von dem Hauptbügel 18 bis nahe an die Windschutzscheibe 26. Das scheibennahe Ende 28 der Windabweisleiste 22 befindet sich in einem Abstand 30 und der Oberfläche 24 der Windschutzscheibe 26 (Figur 2). Dabei ist der Verlauf der Breitenerstreckung der Windabweisleiste 22 so, daß das freie Ende 28 der Windabweisleisten-Breitenerstreckung mit einem Abstand 32, vor der Wischleiste 14 liegt. 'Vor der Wischleiste 14' bezieht sich in diesem Fall auf die Richtung der das Wischblatt 10 anströmenden Luft. Diese Strömungsrichtung ist in den Figuren 2 und 3 mit Pfeilen 33 bzw. 133 symbolisiert und betrachtet dabei die Luftströmung dort, wo sie sich noch in der Nähe der Oberfläche 24 der Windschutzscheibe 26 befindet (Figur 2 und 3).

Wie die Figuren 1 bis 3 weiter zeigen, befindet sich auf der von der Wischleiste 14 abgewandten Seite der Windabweisleiste 22 und mit einem Abstand 36 von dieser eine zweite Windabweisleiste 38. Auch diese zweite Windabweisleiste 38 ist langgestreckt ausgebildet und liegt im wesentlichen parallel zur ersten Windabweisleiste 22 bzw. zum Wischblatt 10. Es ergibt sich somit ein langgestreckter Schlitz, dessen Breite dem Abstand 36 entspricht. Als Wischblatt wird herkömmlich das bezeichnet, was die Einzelteile 18, 16 und 14 bilden. Natürlich sind bei der hier behandelten Erfindung auch die beiden Windabweisleisten 22 und 38 Bestandteil des Wischblatts 10. Zur Halterung der zweiten Windabweisleiste 38 sind zwischen dieser und der ersten Windabweisleiste 22 mehrere rippenartige Stützen 40 angeordnet. Die rippenartigen Stützen 40 sind plattenförmig ausgebildet und mit ihren Schmalseiten mit den beiden Windabweisleisten 22 und 38 verbunden. Die Verbindung kann durch Kleben, Ultraschallschweißen etc. gebildet sein. Auch eine einstückige Ausbildung der Stützen 40 mit einer der beiden Windabweisleisten 22 bzw. 38 ist denkbar. Die rippenartigen Stützen 40 unterteilen somit einen Kanal 44, der zwischen den beiden einander zugewandten Oberflächen 46 und 48 der beiden Windabweisleisten 22 und 38 gebildet ist. Es ergeben sich somit zwischen den einander benachbarten rippenartigen Stützen 40 Teilkanäle 50, deren Verläufe sich von nahe der Windschutzscheibe 26 wegerstrecken. Die Seitenwangen der rippenartigen Stützen 40 bilden Leitflächen 52 zur Führung der Luftströmung, welche durch die Pfeile 33 bzw. 133 angedeutet ist. Sie sind in Ebenen ausgerichtet, welche aufrecht, vorzugsweise senkrecht auf der zu wischenden Scheibenoberfläche 24 stehen. Dabei sorgen diese Seitenwangen 52 insbesondere dafür, daß die Luftströmung im wesentlichen quer zur Längserstreckung der Windabweisleiste 22 und 38 geführt ist. Wie die Figur 2 besonders deutlich zeigt, ist der Abstand 30 zwischen dem scheibennahen Ende 28 der Windabweisleisten-Breitenerstreckung der ersten Windabweisleiste 22 kleiner als der Abstand 60 zwischen dem scheibennahen Ende 62 der Windabweisleisten-Breitenerstreckung der zweiten Windabweisleiste 38. Weiter kann von erheblicher Bedeutung sein, wenn der Abstand 36 zwischen den aneinander zugewandten Oberflächen 46 und 48 der beiden Windabweisleisten 22 und 38 nahe der zu wischenden Scheibe größer ist als im scheibenfernen Bereich (Figur 3). Durch eine derartige Ausbildung kann durch die Ausnutzung des dabei entstehenden, sogenannten Venturi-Effekts eine besonders wirkungsvolle Anlage der Wischleiste 14 an der Oberfläche 24 der Windschutzscheibe 26 erreicht werden. Weiter ist aus den Figuren 1 und 2 ersichtlich, daß der Verlauf der Breitenerstreckungen der beiden Windabweisleisten 22 und 38 im wesentlichen gleich ist. Zur Gewichtsersparnis kann es von Vorteil sein, wenigstens eine der beiden Windabweisleisten 22, 38 und/oder die rippenartigen Stützen 40 als Hohlkörper auszubilden.

Das Wischblatt gemäß Figur 3 entspricht im wesentlichen dem Wischblatt gemäß Figur 1. Deshalb sind die einander entsprechenden Einzelteile dieser beiden Wischblätter auch mit gleichen Bezugszahlen bezeichnet worden. Abweichend von der Ausbildung des Wischblatts gemäß Figur 1 ist beim Wischblatt gemäß Figur 3 die zweite, äußere Windabweisleiste 138 als ebene Platte ausgebildet, welche in ihrem Breitenverlauf nicht dem Breitenverlauf der ersten Windabweisleiste 22 folgt. Dadurch nähern sich die einander zugewandte Oberflächen 146, 148 dieser Windabweisleisten 22, 138 im Mittelbereich ihrer Breitenerstreckung einander an und streben danach wieder auseinander. Dadurch ergibt sich im Mittelbereich 140 der Kanäle 150 eine düsenartige Verengung 152, welche ebenfalls den erwünschten Venturi-Effekt bewirkt, wenn die Luft in Richtung des Pfeiles 133 durch die Kanäle 150 strömt. Auch in diesem Fall sind mehrere rippenartige Stützen 140 zwischen den beiden Windabweisleisten 22 und 138 angeordnet, welche diese beiden Windabweisleisten fest miteinander verbinden.

Wie die Figuren 2 und 3 verdeutlichen, sind bei beiden Ausführungsbeispielen die ersten, inneren Windabweisleisten 22 einstückig mit dem Hauptbügel 18 des Tragegestells 12 verbunden. Es ist aber auch denkbar, diese Windabweisleiste 22 als separates Teil auszubilden und an dem Hauptbügel 18 zu befestigen.

## Patentansprüche

1. Wischvorrichtung für Scheiben von Kraftfahrzeugen, mit einem der zu seiner Längserstreckung über die Scheibe verschiebbaren Wischblatt (10), das ein Traggestell (12) und eine an diesem gehaltene, an der äußeren Oberfläche der Scheibe angelegte Wischleiste (14) aufweist sowie mit einer sich zur Wischleiste im wesentlichen parallel längserstreckenden Windabweisleiste (22) versehen ist, welche am Traggestell (12) befestigt bzw. einstückig mit dem Hauptbügel (18) des mehrteiligen, aus dem Hauptbügel (18) und den die Wischleiste (14) fassenden Krallenbügeln (16) bestehenden Traggestell (12) ausgebildet und in Anströmrichtung vor der Wischleiste (14) angeordnet ist und die sich mit ihrer Breite von nahe der Scheibe bis wenigstens zum Traggestell (12) erstreckt, wobei das scheibennahe Ende der Windabweisleisten-Breitenerstreckung mit einem Abstand (32) vor der Wischleiste (14) liegt, dadurch gekennzeichnet, daß auf der von der Wischleiste (14) abgewandten Seite der Windabweisleiste (22) und mit Abstand (32) von dieser eine zweite Windabweisleiste (38 bzw. 138) angeordnet und mit dem Wischblatt (10) verbunden ist, wobei die anströmende Luft in einen zwischen den einander zugewandten Flächen (46, 48; 146, 148) der beiden Windabweisleisten (22, 38) gebildeten Kanal (50, 150) derart geführt wird, daß der Anpreßdruck auf das Wischblatt (10) erhalten bleibt.

2. Wischvorrichtung nach Anspruch 1, dadurch gekennzeichnet, daß die zweite Windabweisleiste (38 bzw. 138) über rippenartige Stützen (40) mit der ersten Windabweisleiste (22) und über diese mit dem Wischblatt (10) verbunden ist.

3. Wischvorrichtung nach Anspruch 2, dadurch gekennzeichnet, daß ein Schlitz (44) zwischen den beiden Windabweisleisten (22 und 38 bzw. 138) mit einer dem Abstand (36) entsprechenden Breite durch die mit Abstand voneinander angeordneten Stützen (50) in mehrere Teilkanäle (50) unterteilt ist.

4. Wischvorrichtung nach Anspruch 3, dadurch gekennzeichnet, daß die, die Teilkanäle (50) begrenzenden Seitenwangen (52) der Stützen (50) Leitflächen für durch die Teilkanäle strömende Luft bilden.

5. Wischvorrichtung nach Anspruch 4, dadurch gekennzeichnet, daß die Leitflächen (52) in Ebenen ausgerichtet sind, die aufrecht zu der zu wischenden Scheibenoberfläche (24) stehen.

6. Wischvorrichtung nach Anspruch 5, dadurch gekennzeichnet, daß die Leitflächen (52) in Ebenen ausgerichtet sind, die im wesentlichen senkrecht auf der zu wischenden Scheibenoberfläche (24) stehen.

7. Wischvorrichtung nach einem der Ansprüche 1 bis 6, dadurch gekennzeichnet, daß der Abstand (30) zwischen dem scheibennahen Ende (28) der Windabweisleisten-Breitenerstreckung der ersten Windabweisleiste (22) kleiner ist als der Abstand (60) zwischen dem scheibennahen Ende der Windabweisleisten-Breitenerstreckung der zweiten Windabweisleiste (38 bzw. 138).

8. Wischvorrichtung nach einem der Ansprüche 1 bis 7, dadurch gekennzeichnet, daß der Abstand (36) zwischen den einander zugewandten Oberflächen (46, 48) der beiden Windabweisleisten (22, 38) nahe der zu wischenden Scheibe (26) größer ist als im scheibenfernen Bereich.

9. Wischvorrichtung nach einem der Ansprüche 1 bis 7, dadurch gekennzeichnet, daß der Verlauf der Breitenerstreckung wenigstens einer der beiden Windabweisleisten (22 bzw. 138) in bezug auf die andere Windabweisleiste der Gestalt ist, daß sich die beiden einander zugewandten Oberflächen (146, 148) dieser Windabweisleisten, ausgehend vom scheibennahen Bereich der Teilkanäle (150) einander annähern und dann wieder auseinanderstreben, so daß sich eine düsenartige Verengung (152) der Teilkanäle (150) ergibt.

10. Wischvorrichtung nach einem der Ansprüche 1 bis 7, dadurch gekennzeichnet, daß der Verlauf der Breitenerstreckung der zweiten Windabweisleiste (38) dem Verlauf der Breitenerstreckung der ersten Windabweisleiste (22) im wesentlichen entspricht.

11. Wischvorrichtung nach einem der Ansprüche 2 bis 10, dadurch gekennzeichnet, daß die rippenartigen Stützen (40) als Hohlkörper ausgebildet sind.

12. Wischvorrichtung nach einem der Ansprüche 1 bis 11, dadurch gekennzeichnet, daß die erste, innere Windabweisleiste (22) einstückig mit einem zum Traggestell (12) gehörenden Hauptbügel (18) verbunden ist.

## Claims

1. Wiper device for windows of motor vehicles, with a wiper blade (10) which can be displaced transversely to its longitudinal extent over the window, has a supporting frame (12) and a wiper strip (14), which is held on the latter and is placed against the outer surface of the window, and is provided with a wind-deflector strip (22) which extends longitudinally essentially parallel to the wiper strip and is secured to the supporting frame (12), or is of integral design with the main bracket (18) of the multi-part supporting frame (12), which comprises the main bracket (18) and the claw brackets (16) gripping the wiper strip (14), and is arranged in front of the wiper strip (14), in the direction of approach flow, and whose width extends from close to the window at least as far as the supporting frame (12), that end of the wind-deflector strip's transverse extent which is close to the window lying at a distance (32) in front of the wiper strip (14), characterized in that a second wind-deflector strip (38 or 138) is arranged on that side, which is remote from the wiper strip (14), of the wind-deflector strip (22) and at a distance (32) from the latter, and is connected to the wiper blade (10), the approaching air being guided in such a manner into a channel (50, 150) formed between the facing surfaces (46, 48; 146, 148) of the two wind-deflector strips (22, 38) that the contact pressure on the wiper blade (10) is maintained.

2. Wiper device according to Claim 1, characterized in that the second wind-deflector strip (38 or 138) is connected via rib-like supports (40) to the first wind-deflector strip (22) and via the latter to the wiper blade (10).

3. Wiper device according to Claim 2, characterized in that a gap (44) between the two wind-deflector strips (22 and 38 or 138) with a width corresponding to the distance (36) is divided into a plurality of subchannels (50) by the supports (40), which are arranged at a distance from one another.

4. Wiper device according to Claim 3, characterized in that the sides (52), which bound the subchannels (50), of the supports (40) form guide surfaces for air flowing through the subchannels.

5. Wiper device according to Claim 4, characterized in that the guide surfaces (52) are aligned in planes which are upright with respect to the window surface (24) to be wiped.

6. Wiper device according to Claim 5, characterized in that the guide surfaces (52) are aligned in planes which are essentially perpendicular to the window surface (24) to be wiped.

7. Wiper device according to one of Claims 1 to 6, characterized in that the distance (30) between that end (28) of the transverse extent of the first wind-deflector strip (22) which is close to the window is smaller than the distance (60) between that end of the transverse extent of the second wind-deflector strip (38 or 138) which is close to the window.

8. Wiper device according to one of Claims 1 to 7, characterized in that the distance (36) between the mutually facing surfaces (46, 48) of the two wind-deflector strips (22, 38) close to the window (26) to be wiped is larger than in the region remote from the window.

9. Wiper device according to one of Claims 1 to 7, characterized in that the variation in the transverse extent of at least one of the two wind-deflector strips (22 or 138) with respect to the other wind-deflector strip is such that the two mutually facing surfaces (146, 148) of these wind-deflector strips, starting from that region of the subchannels (150) which is close to the window, approach each other and then diverge again, resulting in a nozzle-like narrowing (152) of the sub-channels (150).

10. Wiper device according to one of Claims 1 to 7, characterized in that the variation in the transverse extent of the second wind-deflector strip (38) essentially corresponds to the variation in the transverse extent of the first wind-deflector strip (22).

11. Wiper device according to one of Claims 2 to 10, characterized in that the rib-like supports (40) are designed as hollow bodies.

12. Wiper device according to one of Claims 1 to 11, characterized in that the first, inner wind-deflector strip (22) is connected integrally to a main bracket (18) belonging to the supporting frame (12).

## Revendications

1. Dispositif d'essuyage de vitres de véhicules automobiles, dans lequel :
- une lame (10), pouvant se déplacer sur la vitre, perpendiculairement à sa direction longitudinale, comprend une armature porteuse (12) maintenant un balai (14) posé sur la surface de la vitre,
- un déflecteur d'air (22), sensiblement parallèle dans sa longueur au balai, est fixé à l'armature (12) ou ne fait qu'une pièce avec l'étrier principal (18) de l'armature porteuse (12), faite de plusieurs pièces comprenant l'étrier principal (18) et les étriers à griffes (14) enserrant le balai (14), ce déflecteur étant placé en amont du balai (14), par rapport au sens de l'écoulement de l'air,
- le déflecteur s'étend en largeur depuis la proximité de la vitre jusqu'à l'armature (12) au moins, son extrémité, côté vitre, se trouvant à une certaine distance (32), en avant du balai (14);
caractérisé en ce que, en regard de la face du déflecteur (22), située à l'opposé du balai (14), et à une certaine distance (32), de celui-ci, il est prévu un second déflecteur (38) relié à la lame, de sorte que l'air incident se trouve guidé dans un canal (50, 150) formé par les faces en regard (46, 48 ; 146, 148) des deux déflecteurs (22, 38) et assure le maintien de la pression d'appui de la lame d'essuyage (10).

2. Dispositif selon la revendication 1, caractérisé en ce que le second déflecteur (38 ou 138) est relié par des supports (40) en forme de nervures au premier, et, par l'intermédiaire de celui-ci, à la lame (10).

3. Dispositif selon la revendication 2, caractérisé en ce qu'une fente (44), délimitée par les deux déflecteurs (22 et 38 ou 138) et de largeur correspondant à leur espacement (36) est divisée en plusieurs canaux élémentaires (50) par des appuis (40) espacés les uns des autres.

4. Dispositif selon la revendication 3, caractérisé en ce que les joues latérales (52) des appuis (40) délimitant les canaux élémentaires (50) constituent des surfaces déflectrices de l'air traversant ces canaux.

5. Dispositif selon la revendication 4, caractérisé en ce que les surfaces déflectrices (52) sont disposées dans des plans debout par rapport à la surface (24) de la vitre à balayer.

6. Dispositif selon la revendication 5, caractérisé en ce que les surfaces déflectrices (52) sont disposées dans des plans perpendiculaires à la surface (24) de la vitre à balayer.

7. Dispositif selon une des revendications 1 à 8, caractérisé en ce que la distance (30) séparant l'extrémité (28, côté vitre, de la partie élargie du premier déflecteur (22) est inférieure à la distance correspondante (60) relative au second déflecteur (38 ou 138).

8. Dispositif selon une des revendications 1 à 7, caractérisé en ce que la distance (38) entre les faces en regard (46, 48) des deux déflecteurs (22, 38), près de la vitre (26) à balayer, est supérieure à la distance correspondante, mesurée à un niveau plus éloigné de la vitre.

9. Dispositif selon une des revendications 1 à 7, caractérisé en ce que le profil, dans le sens de la largeur, d'au moins un des deux déflecteurs (22, 138), par rapport à l'autre déflecteur est tel que les deux faces en regard (146, 148) de ces déflecteurs, en partant de la partie des canaux élémentaires (150) proches de la vitre, vont en se rapprochant pour s'écarter ensuite, produisant ainsi un rétrécissement (152), en forme de tuyère, des canaux élémentaires (150).

10. Dispositif selon une des revendications 1 à 7, caractérisé en ce que le profil, dans le sens de la largeur, du second déflecteur (38) correspond sensiblement à celui du premier déflecteur (22).

11. Dispositif selon une des revendications 2 à 10, caractérisé en ce que les appuis nervurés (40) sont des corps creux.

12. Dispositif selon une des revendications 1 à 11, caractérisé en ce que le premier déflecteur (22), situé à l'intérieur, ne fait qu'une seule pièce avec un étrier principal (18) appartenant à l'armature porteuse (12).
